# EUROPEAN PATENT APPLICATION

(11) **EP 4 040 546 A1**
(43) Date of publication of application: **10.08.2022**
(21) Application number: 21844945.2
(22) Date of filing: 13.08.2021
(51) Int. Cl.: H01M 4/64, H01M 4/134, H01M 4/62, H01M 4/1395, H01M 10/0525

(54) **LITHIUM-SUPPLEMENTING NEGATIVE ELECTRODE PIECE, PREPARATION METHOD THEREFOR AND LITHIUM ION BATTERY**

(30) Priority: 03.12.2020 CN 202011395197
(71) Applicant: Tianjin EV Energies Co., Ltd., Tianjin 300380 (CN)
(72) Inventor: CONG, Changjie, Tianjin 300380 (CN); GUO, Chuntai, Tianjin 300380 (CN); GAO, Xiuling, Tianjin 300380 (CN); CUI, Xuehong, Tianjin 300380 (CN)
(74) Representative: Cabinet Beaumont
(86) International application number: PCT/CN2021/112376
(87) International publication number: WO 2022/116588

(57) **Abstract**

Provided are a lithium supplement negative electrode plate that includes a porous current collector, lithium supplement coatings on the upper surface and the lower surface of the porous current collector respectively, and active material layers on the surfaces of the lithium supplement coatings, where the lithium supplement coatings are filled into through holes of the porous current collector, and the lithium supplement coatings include the following components in mass percentage: 90% to 98% of metal lithium powder, 1% to 5% of a mixture of a good electronic conductor and a good lithium-ion conductor, and 1% to 5% of a binder.

## Description

### TECHNICAL FIELD

The present application belongs to the field of lithium supplement for lithium battery and relates to a lithium supplement negative electrode plate, a method for preparing the same, and a lithium-ion battery.

### BACKGROUND

In the existing art, in the patent CN102610861A, the metal lithium strip is directly pressed on the surface of the negative electrode plate, and under the infiltration of the electrolyte, the lithium strip is used to supply lithium for the negative electrode plate, thereby reducing the irreversible capacity loss of initial charge and improving the energy density of the battery. The solid copper or aluminum foil used in the current collector needs to be laminated with lithium sheets on the surface of each negative electrode plate. At present, lithium strips on the market are thick, and due to the soft texture of lithium metal, lithium strips are subjected to calendaring into lithium foil. In order to ensure the uniformity of lithium foil, the thickness and width of lithium foil cannot be expanded infinitely, and thus, after pre-lithiation, lithium foil (lithium strips) usually cannot be completely consumed, resulting in excessive lithiation of the negative electrode and causing potential safety hazard due to lithium precipitation.

Patent CN102779975A discloses a lithium supplement method in which lithium metal powder is directly sprayed on the surface of the negative electrode plate under the action of electrostatic effect by means of mechanical vibration, that is, "dry lithium supplement".

Patent CN108878974A discloses a method for supplementing lithium by using a lithium supplement electrolyte, in which, firstly, the lithium supplement electrolyte is injected into a lithium-ion battery, the lithium-ion battery is pre-charged to a lithium supplement voltage to perform lithium supplement on the negative electrode and control the lithium supplement amount, the residual lithium supplement electrolyte is removed after lithium supplement reaction is completed, a conventional electrolyte is then injected, and then the battery is subjected to pre-charging and formation.

Patent CN109888192A discloses a method for supplementing a lithium-ion battery negative electrode plate with lithium, which includes the following steps: drying a negative electrode plate after the negative electrode plate contacts a lithium hydrogencarbonate solution to obtain a lithium supplement negative electrode plate, and then the lithium supplement negative electrode plate, a positive electrode plate, a separator, and an electrolyte are assembled and subjected to formation to obtain the required lithium-ion battery.

In the existing art, there are different technical problems in the above-mentioned methods. For example, although the dry method is simple and easy to operate, lithium powder is easy to float in the air and generates dust in the operating environment, posing huge potential safety hazards in the operating process, causing badly environmental pollution, and leading to a low production efficiency; or the process is cumbersome, which may affect the performance of the electrolyte, thereby affecting the performance of the battery and hampering the improvement of the battery safety.

To sum up, the method for supplementing a lithium-ion battery negative electrode plate with lithium in the art needs to be improved to achieve the accurate lithium supplement for the negative electrode plate.

### SUMMARY

The present application provides a lithium supplement negative electrode plate, a method for preparing the same, and a lithium-ion battery, which can achieve the uniform and accurate lithium supplement for the silicon-carbon negative electrode, improve the initial charge-discharge efficiency and energy density of the battery, and improve the conductivity of the silicon-carbon negative electrode plate.

To achieve the preceding objects, technical solutions of the present application are implemented as follows:
A lithium supplement negative electrode plate is provided. The lithium supplement negative electrode plate includes a porous current collector, lithium supplement coatings on the upper surface and the lower surface of the porous current collector respectively, and active material layers on the surfaces of the lithium supplement coatings, where the lithium supplement coatings are filled into through holes of the porous current collector, and the lithium supplement coatings include the following components in mass percentage: 90% to 98% of metal lithium powder, 1% to 5% of the mixture of a good electronic conductor and a good lithium-ion conductor, and 1% to 5% of a binder.

Optionally, the lithium supplement coating has a thickness of 2 µm to 10 µm.

Optionally, the good electronic conductor is at least one of carbon black, Ketjen black, conductive graphite, conductive fibers, carbon nanotubes, and graphene, and the good lithium-ion conductor is at least one of LiF, Li₂CO₃, Li₄Ti₅O₁₂, Li₃PO₃, Li₄SiO₄, SiC, SiO₂, and CuS.

Optionally, the binder is one of or a mixture of at least two of polytetrafluoroethylene, polyvinylidene fluoride (PVDF), acrylic acid, polyethylene oxide, carboxymethyl cellulose sodium (CMC), styrene-butadiene rubber (SBR), hydroxypropyl methyl cellulose, carboxy styrene-butadiene latex, and polyvinyl alcohol.

Optionally, the hole shape of the porous current collector is at least one of circle, oval, rhombus, polygon, and triangle; the matrix material of the porous current collector has a thickness of 5 µm to 30 µm, the aperture of the through holes is 0.2 mm to 3 mm, and the porosity is 10% to 40%; and the through holes are formed by one of hole punching, hole pressing, etching, electrolysis, electroplating, and laser etching.

Another object of the present application is to provide a method for preparing a lithium supplement negative electrode plate, which includes the following steps:
(1) selecting a suitable pre-lithiation capacity according to a capacity of a silicon-carbon negative electrode, accurately calculating the mass of required metal lithium powder according to the required pre-lithiation capacity, and depositing a lithium supplement slurry in through holes and on surfaces of a porous current collector using any one of magnetron sputtering deposition or spraying coating to obtain the porous current collector including lithium supplement coatings; and
(2) homogenizing a negative electrode active material, a conductive agent, a binder, and a solvent according to a certain proportion and sequence, coating the negative electrode slurry on the surfaces of the porous current collector including the lithium supplement coatings, drying the same at 80°C to 120°C, rolling the same after drying, and obtaining a rolled lithium supplement negative electrode plate.

Optionally, the negative electrode active material, the conductive agent, and the binder are at a mass ratio of (88 to 98):(1 to 7):(1 to 5).

Optionally, the negative electrode active material is at least one of simple substance silicon, silicon monoxide, silicon oxide, artificial graphite, natural graphite, composite graphite, soft carbon, and hard carbon; the conductive agent is at least one of conductive carbon black, conductive graphite, carbon nanotubes, carbon nanofibers, and graphene; and the binder is one of SBR, LA133, and Poly(acrylic acid) (PAA).

Another object of the present application is to provide a lithium-ion battery which includes a positive electrode plate, a separator, and a lithium supplement negative electrode plate as described above.

Compared with the existing art, the lithium supplement negative electrode plate, the method for preparing the same, and a lithium-ion battery provided by the present application have the following advantages.

According to the present solution, with the arrangement of lithium supplement coatings on the surfaces of the porous current collector, uniform and accurate lithium supplement for the silicon-carbon negative electrode plate can be achieved, the energy density and cycle performance of the lithium-ion battery can be significantly improved, and the lithium precipitation caused by the excessive lithiation of the silicon-carbon negative electrode can be prevented. After the lithium supplement for the silicon-carbon negative electrode is completed, the composite of a good electronic conductor and a good lithium-ion conductor remaining in the lithium supplement coatings has good ionic conductivity and electronic conductivity. Meanwhile, the existence of porous through holes in the porous current collector can improve the permeability of the electrolyte, accelerate the transport of lithium ions, reduce the internal resistance of the battery which is increased due to the formation of the solid electrolyte interphase (SEI) film on the surface of the silicon-carbon electrode after lithium supplement, and improve the electrochemical performance of the battery. In addition, the existence of lithium supplement coatings on the surfaces of the porous current collector can also increase the plate adhesion of the negative electrode plate.

### BRIEF DESCRIPTION OF DRAWINGS

The drawings forming a part of the present application are used to provide a further understanding of the present application. The exemplary embodiments and descriptions thereof in the present application are used to explain the present application and not to limit the present application in any improper way. In the drawings:
FIG. 1 is a structural schematic diagram of a copper foil porous current collector according to an embodiment of the present application;
FIG. 2 is a structural schematic diagram of a copper foil porous current collector coated with lithium supplement coatings according to an embodiment of the present application; and
FIG. 3 is a structural schematic diagram of a lithium supplement negative electrode plate according to an embodiment of the present application.

### LIST OF REFERENCE NUMBERS

101 a first lithium supplement coating; 102 porous current collector; 103 a second lithium supplement coating; 104 a first active material layer; 105 a second active material layer; 2 holes.

### DETAILED DESCRIPTION

Unless otherwise defined, technical terms used herein have the same meanings as commonly understood by those skilled in the art to which the present application belongs. All the experimental reagents applied in the following embodiments are conventional biochemical reagents unless otherwise specified; experimental methods applied herein are all conventional methods unless otherwise specified.

Hereinafter the present application will be described in detail in conjunction with examples and the drawings.

A lithium supplement negative electrode plate includes a porous current collector, lithium supplement coatings and active material layers which are arranged in sequence, where the lithium supplement coatings are filled into through holes of the porous current collector.

For the porous current collector, the hole shape of the porous current collector may be at least one of circle, oval, and polygon such as rhombus or triangle, and the holes may be formed by means of hole punching, hole pressing, etching, electrolysis, electroplating or the like. The matrix material of the porous current collector has a thickness of 5 µm to 30 µm. The porous current collector cannot be too thick in the negative electrode material of the battery, otherwise the mass of the battery will be heavy, which affects the energy density of the battery, while if the porous current collector is too thin, the porous current collector will be difficult to produce and expensive in cost. The through hole aperture is 0.2 mm to 3mm, and the porosity is 10% to 40%. The through holes are formed by one of hole punching, hole pressing, etching, electrolysis, electroplating, and laser etching.

For the lithium supplement coatings, the lithium supplement coatings comprise the following components in mass percentage: 90% to 98% of metal lithium powder, 1% to 5% of the composite of a good electronic conductor and a good lithium-ion conductor, and 1% to 5% of a binder, where there is no requirement for the ratio of the good electronic conductor and the good lithium-ion conductor. The prepared lithium supplement slurry is coated on the matrix material of the copper foil porous current collector with a thickness of 2 microns to 10 microns. If the lithium supplement coating is too thick, the excess of lithium is prone to be caused and potential safety hazards such as lithium precipitation exist while if the lithium supplement coating is too thin, there will be processing difficulty. The good electronic conductor is at least one of carbon black, Ketjen black, conductive graphite, conductive fibers, carbon nanotubes, and graphene, and the good lithium-ion conductor is at least one of LiF, Li₂CO₃, Li₄Ti₅O₁₂, Li₃PO₃, Li₄SiO₄, SiC, SiO₂, and CuS. The binder may be one of or a mixture of at least two of polytetrafluoroethylene, polyvinylidene fluoride, acrylic acid, polyethylene oxide, carboxymethyl cellulose sodium, styrene-butadiene rubber, hydroxypropyl methyl cellulose, carboxy styrene-butadiene latex, and polyvinyl alcohol.

A suitable pre-lithiation capacity is selected according to the capacity of the silicon-carbon negative electrode, the mass of the required metal lithium powder is accurately calculated according to the required pre-lithiation capacity, and a lithium supplement slurry is deposited in through holes and on surfaces of the porous current collector using any one of magnetron sputtering deposition or spraying coating to obtain the porous current collector including lithium supplement coatings.

The negative electrode plate is prepared in the following manner: homogenizing a negative electrode active material, a conductive agent, a binder, and an additive according to a certain proportion and sequence, coating the negative electrode slurry on the surfaces of the porous current collector including the lithium supplement coatings, drying the same at 80°C to 120°C, rolling the same after drying, and obtaining the rolled negative electrode plate, where the negative electrode active material, the conductive agent, and the binder are at a mass ratio of (88 to 98):(1 to 7):(1 to 5); the negative electrode active material may be one or more of simple substance silicon, silicon monoxide, silicon oxide, artificial graphite, natural graphite, composite graphite, soft carbon, and hard carbon; the conductive agent is at least one of conductive carbon black, conductive graphite, carbon nanotubes, carbon nanofibers, and graphene; and the binder is one of SBR (styrene-butadiene rubber), LA133, PAA, and other aqueous binders.

The positive electrode plate is prepared in the following manner: homogenizing a positive electrode active material, a conductive agent, a binder, and an additive according to a certain proportion and sequence, coating the positive electrode slurry on the surfaces of an aluminum foil porous current collector, drying the same at 80°C to 120°C, rolling the same after drying, and obtaining the rolled positive electrode plate, where the positive electrode active material, the conductive agent, the binder and the additive are at a mass ratio of (89 to 97):(1 to 5):(2 to 6); the positive electrode active material may be selected from at least one of ternary material lithium nickel manganese cobalt oxide (NMC), lithium nickel cobalt aluminum oxide (NCA), LiCoO₂, LiMn₂O₄ and LiFePO₄; the conductive agent is at least one of conductive carbon black, conductive graphite, carbon nanotubes, carbon nanofibers, and graphene; and the binder is at least one of PVDF, SBR and CMC.

The pre-lithiation is performed in the following manner: preparing a positive electrode, a negative electrode or composite negative electrode, and a separator into a lithium-ion battery by means of laminating or wounding, subjecting the prepared battery to electrolyte injection and packaging, and allowing the prepared battery cell to stand in an environment of 20°C to 40°C for 1 to 5 days for pre-charging, formation and grading.

### Example 1

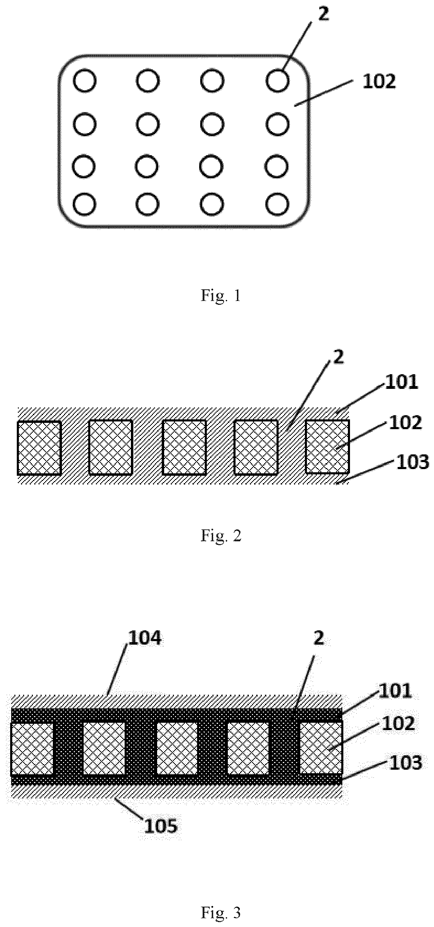

(1) For a negative electrode active material (the mixture of graphite and silicon, with a capacity C_{negative} of 500 mAh g⁻¹ and an initial coulomb efficiency (ICE) of 80%), the pre-lithiation design capacity C_{design} was 90% of the irreversible capacity of the silicon-carbon negative electrode, the surface density ρ_{negative} surface density of the plate was 20 mg cm⁻², the area S_{negative} area of the plate was 82 cm², the specific capacity C_{Li} of metal lithium powder was 3600 mAh g⁻¹, and according to the lithium supplement amount of the negative electrode, the mass of the required metal lithium powder M_{Li} = ρ_{negative} surface density ^{∗} S_{negative} area ^{∗} C_{negative} ^{∗} (100% - ICE) ^{∗} 90%/C_{Li} could be accurately calculated, that is, M_{Li} = 20 mg cm^{-2 ∗} 82 cm^{2 ∗} 500 mAh g^{-1 ∗} (100% - 80%) ^{∗} 90%/3600 mAh g⁻¹ = 41 mg.
(2) Metal lithium powder, a composite of a good electronic conductor and a good lithium-ion conductor and a binder were prepared into a lithium supplement slurry according to the ratio of 96.5% of metal lithium powder, 2% of the composite of a good electronic conductor and a good lithium-ion conductor (1% of the good electronic conductor and 1% of the good lithium-ion conductor) and 1.5% of the binder, 41 mg of metal lithium powder, 0.42 mg of carbon black, 0.42 mg of lithium carbonate, and 0.64 mg of polyvinylidene fluoride were uniformly mixed in tetrahydrofuran solvent, and the lithium supplement slurry was deposited in through holes and on surfaces of a copper foil porous current collector by means of spraying coating to prepare a copper foil porous current collector including lithium supplement coatings, where the thickness of the copper foil porous current collector was 10 µm, the aperture of the through holes was 0.2 µm, and the porosity was 20%. The structural schematic diagrams of the copper foil porous current collector and the copper foil porous current collector including lithium supplement coatings are shown in FIG. 1 and FIG. 2, including the copper foil of the porous current collector 102, a first lithium supplement coating 101 and a second lithium supplement coating 103 that were located on the upper surface and the lower surface of the porous current collector 102 respectively and each had a thickness of 3 µm, and through holes 2 on the current collector.
(3) A negative electrode active material (the mixture of artificial graphite and simple substance silicon), a conductive agent (Super P) and a binder (PVDF) were mixed according to the weight ratio of 94:3:3 to prepare a slurry, the slurry was coated on the front and back sides of the copper foil porous current collector including lithium supplement coatings, and rolling and cutting were carried out after drying to obtain a negative electrode plate. The structural schematic diagram of the negative electrode plate is shown in FIG. 3, including the copper foil of the porous current collector 102, the first lithium supplement coating 101 and the second lithium supplement coating 103 on the upper surface and the lower surface of the porous current collector 102 respectively, and a first active material layer 104 and a second active material layer 105 respectively on the upper surface of the first lithium supplement coating 101 and the lower surface of the second lithium- supplement coating 103.
(4) A positive electrode active material (ternary material NCM), a conductive agent (Super P) and a binder (PVDF) were mixed according to the weight ratio of 93:3:4 to prepare a slurry, the slurry was coated on the front and back sides of an aluminum foil current collector, and rolling and cutting were carried out after drying to obtain a positive electrode plate. The positive electrode plate, the negative electrode plate and a ceramic separator were prepared into a lithium-ion battery by means of laminating, and the prepared battery was subjected to electrolyte injection, allowed to stand at 25°C for 2 days and then subjected to pre-charging, formation and grading. The experimental results are shown in Table 1, in which the following comparative example differs from this example in that the mixture of a good electronic conductor and a good lithium-ion conductor was not added in the negative electrode plate.

### Comparative Example 1

(1) Metal lithium powder and a binder were prepared into a lithium supplement slurry according to the ratio of 98.5% of metal lithium powder and 1.5% of the binder, 41 mg of metal lithium powder and 0.62 mg of polyvinylidene fluoride were uniformly mixed in tetrahydrofuran solvent, and the lithium supplement slurry was deposited in through holes and on surfaces of a copper foil porous current collector by means of spraying coating to prepare a copper foil porous current collector including lithium supplement coatings, where the thickness of the copper foil porous current collector was 10 µm, the aperture of the through holes was 0.2 µm, and the porosity was 20%.
(2) A negative electrode active material (the mixture of artificial graphite and simple substance silicon), a conductive agent (Super P) and a binder (PVDF) were mixed according to the weight ratio of 94:3:3 to prepare a slurry, the slurry was coated on the front and back sides of the copper foil porous current collector including lithium supplement coatings, and rolling and cutting were carried out after drying to obtain a negative electrode plate.
(3) A positive electrode active material (ternary material NCM), a conductive agent (Super P) and a binder (PVDF) were mixed according to the weight ratio of 93:3:4 to prepare a slurry, the slurry was coated on the front and back sides of an aluminum foil current collector, and rolling and cutting were carried out after drying to obtain a positive electrode plate. The positive electrode plate, the negative electrode plate and a ceramic separator were prepared into a lithium-ion battery by means of laminating, and the prepared battery was subjected to electrolyte injection, allowed to stand at 25°C for 2 days and then subjected to pre-charging, formation and grading.

**Table 1 Experimental results of electrical performance test of the lithium-ion battery without the mixture of a good electronic conductor and a good lithium-ion conductor added and the lithium-ion battery supplemented with lithium according to the present application**

| | Initial efficiency | Specific discharge capacity | Cell internal resistance | Normal temperature cycle |
|---|---|---|---|---|
| Comparative Example 1 | 84.1% | 179.5 mAh/g | 10.7 mΩ | 2000@80% |
| Example 1 | 84.3% | 180.3 mAh/g | 8.6 mΩ | 2100@80% |

### Example 2

(1) For a negative electrode active material (the mixture of graphite and silicon, with a capacity C_{negative} of 500 mAh g⁻¹ and an ICE of 80%), the pre-lithiation design capacity C_{design} was 100% of the irreversible capacity of the silicon-carbon negative electrode, the surface density ρ_{negative} surface density of the plate was 20 mg cm⁻², the area S_{negative} area of the plate was 82 cm², the specific capacity C_{Li} of metal lithium powder was 3600 mAh g⁻¹, and according to the lithium supplement amount of the negative electrode, the mass of the required metal lithium powder M_{Li} = ρ_{negative} surface density ^{∗} S_{negative} area ^{∗} C_{negative} ^{∗} (100% - ICE) ^{∗} 100%/CLi could be accurately calculated, that is, M_{Li} = 20 mg cm^{-2 ∗} 82 cm^{2 ∗} 500 mAh g^{-1 ∗} (100% - 80%) ^{∗} 100%/3600 mAh g⁻¹ = 45.5mg.
(2) Metal lithium powder, a composite of a good electronic conductor and a good lithium-ion conductor and a binder were prepared into a lithium supplement slurry according to the ratio of 96.5% of metal lithium powder, 2% of the composite of a good electronic conductor and a good lithium-ion conductor (1% of the good electronic conductor and 1% of the good lithium-ion conductor) and 1.5% of the binder, 45.5 mg of metal lithium powder, 0.47 mg of carbon black, 0.47 mg of lithium carbonate, and 0.71 mg of polyvinylidene fluoride were uniformly mixed in tetrahydrofuran solvent, and the lithium supplement slurry was deposited in through holes and on surfaces of a copper foil porous current collector by means of spraying coating to prepare a copper foil porous current collector including lithium supplement coatings, where the thickness of the copper foil porous current collector was 10 µm, the aperture of the through holes was 0.2 µm, and the porosity was 20%.
(3) A negative electrode active material (the mixture of artificial graphite and simple substance silicon), a conductive agent (Super P) and a binder (PVDF) were mixed according to the weight ratio of 94:3:3 to prepare a slurry, the slurry was coated on the front and back sides of the copper foil porous current collector including lithium supplement coatings, and rolling and cutting were carried out after drying to obtain a negative electrode plate.
(4) A positive electrode active material (ternary material NCM), a conductive agent (Super P) and a binder (PVDF) were mixed according to the weight ratio of 93:3:4 to prepare a slurry, the slurry was coated on the front and back sides of an aluminum foil current collector, and rolling and cutting were carried out after drying to obtain a positive electrode plate. The positive electrode plate, the negative electrode plate and a ceramic separator were prepared into a lithium-ion battery by means of laminating, and the prepared battery was subjected to electrolyte injection, allowed to stand at 25°C for 2 days and then subjected to pre-charging, formation and grading. The experimental results are shown in Table 2, in which the following comparative example differs from this example in that the mixture of a good electronic conductor and a good lithium-ion conductor was not added to the negative electrode plate.

### Comparative Example 2

(1) Metal lithium powder and a binder were prepared into a lithium supplement slurry according to the ratio of 98.5% of metal lithium powder and 1.5% of the binder, 45.5 mg of metal lithium powder and 0.69 mg of polyvinylidene fluoride were uniformly mixed in tetrahydrofuran solvent, and the lithium supplement slurry was deposited in through holes and on surfaces of a copper foil porous current collector by means of spraying coating to prepare a copper foil porous current collector including lithium supplement coatings, where the thickness of the copper foil porous current collector was 10 µm, the aperture of the through holes was 0.2 µm, and the porosity was 20%.
(2) A negative electrode active material (the mixture of artificial graphite and simple substance silicon), a conductive agent (Super P) and a binder (PVDF) were mixed according to the weight ratio of 94:3:3 to prepare a slurry, the slurry was coated on the front and back sides of the copper foil porous current collector including lithium supplement coatings, and rolling and cutting were carried out after drying to obtain a negative electrode plate.
(3) A positive electrode active material (ternary material NCM), a conductive agent (Super P) and a binder (PVDF) were mixed according to the weight ratio of 93:3:4 to prepare a slurry, the slurry was coated on the front and back sides of an aluminum foil current collector, and rolling and cutting were carried out after drying to obtain a positive electrode plate. The positive electrode plate, the negative electrode plate and a ceramic separator were prepared into a lithium-ion battery by means of laminating, and the prepared battery was subjected to electrolyte injection, allowed to stand at 25°C for 2 days and then subjected to pre-charging, formation and grading.

**Table 2 Experimental results of electrical performance test of the lithium-ion battery without the mixture of a good electronic conductor and a good lithium-ion conductor added and the lithium-ion battery supplemented with lithium according to the present application**

| | Initial efficiency | Specific discharge capacity | Cell internal resistance | Normal temperature cycle |
|---|---|---|---|---|
| Comparative Example 2 | 84.9% | 181.5 mAh/g | 8.5 mΩ | 2150@80% |
| Example 2 | 85.4% | 182.8 mAh/g | 7.1 mΩ | 2230@80% |

### Example 3

(1) For a negative electrode active material (the mixture of graphite and silicon, with a capacity C_{negative} of 500 mAh g⁻¹ and an ICE of 80%), the pre-lithiation design capacity C_{design} was 100% of the irreversible capacity of the silicon-carbon negative electrode, the surface density ρ_{negative} surface density of the plate was 20 mg cm⁻², the area S_{negative} area of the plate was 82 cm², the specific capacity C_{Li} of metal lithium powder was 3600 mAh g⁻¹, and according to the lithium supplement amount of the negative electrode, the mass of the required metal lithium powder M_{Li} = ρ_{negative} surface density ^{∗} S_{negative} area ^{∗} C_{negative} ^{∗} (100% - ICE) ^{∗} 100%/CLi could be accurately calculated, that is, M_{Li} = 20 mg cm^{-2 ∗} 82 cm^{2 ∗} 500 mAh g^{-1 ∗} (100% - 80%) ^{∗} 100%/3600 mAh g⁻¹ = 45.5mg.
(2) Metal lithium powder, a composite of a good electronic conductor and a good lithium-ion conductor and a binder were prepared into a lithium supplement slurry according to the ratio of 95% of metal lithium powder, 3% of the composite of a good electronic conductor and a good lithium-ion conductor (2% of the good electronic conductor and 1% of the good lithium-ion conductor) and 2% of the binder, 45.5 mg of metal lithium powder, 0.96 mg of carbon black, 0.48 mg of lithium carbonate, and 0.96 mg of polyvinylidene fluoride were uniformly mixed in tetrahydrofuran solvent, and the lithium supplement slurry was deposited in through holes and on surfaces of a copper foil porous current collector by means of spraying coating to prepare a copper foil porous current collector including lithium supplement coatings, where the thickness of the copper foil porous current collector was 10 µm, the aperture of the through holes was 0.2 µm, and the porosity was 20%.
(3) A negative electrode active material (the mixture of artificial graphite and simple substance silicon), a conductive agent (Super P) and a binder (PVDF) were mixed according to the weight ratio of 94:3:3 to prepare a slurry, the slurry was coated on the front and back sides of the copper foil porous current collector including lithium supplement coatings, and rolling and cutting were carried out after drying to obtain a negative electrode plate.
(4) A positive electrode active material (ternary material NCM), a conductive agent (Super P) and a binder (PVDF) were mixed according to the weight ratio of 93:3:4 to prepare a slurry, the slurry was coated on the front and back sides of an aluminum foil current collector, and rolling and cutting were carried out after drying to obtain a positive electrode plate. The positive electrode plate, the negative electrode plate and a ceramic separator were prepared into a lithium-ion battery by means of laminating, and the prepared battery was subjected to electrolyte injection, allowed to stand at 25°C for 2 days and then subjected to pre-charging, formation and grading. The experimental results are shown in Table 3, in which the following comparative example differs from this example in that the mixture of a good electronic conductor and a good lithium-ion conductor was not added in the negative electrode plate.

### Comparative Example 3

(1) Metal lithium powder and a binder were prepared into a lithium supplement slurry according to the ratio of 98% of metal lithium powder and 2% of the binder, 45.5 mg of metal lithium powder and 0.93 mg of polyvinylidene fluoride were uniformly mixed in tetrahydrofuran solvent, and the lithium supplement slurry was deposited in through holes and on surfaces of a copper foil porous current collector by means of spraying coating to prepare a copper foil porous current collector including lithium supplement coatings, where the thickness of the copper foil porous current collector was 10 µm, the aperture of the through holes was 0.2 µm, and the porosity was 20%.
(2) A negative electrode active material (the mixture of artificial graphite and simple substance silicon), a conductive agent (Super P) and a binder (PVDF) were mixed according to the weight ratio of 94:3:3 to prepare a slurry, the slurry was coated on the front and back sides of the copper foil porous current collector including lithium supplement coatings, and rolling and cutting were carried out after drying to obtain a negative electrode plate.
(3) A positive electrode active material (ternary material NCM), a conductive agent (Super P) and a binder (PVDF) were mixed according to the weight ratio of 93:3:4 to prepare a slurry, the slurry was coated on the front and back sides of an aluminum foil current collector, and rolling and cutting were carried out after drying to obtain a positive electrode plate. The positive electrode plate, the negative electrode plate and a ceramic separator were prepared into a lithium-ion battery by means of laminating, and the prepared battery was subjected to electrolyte injection, allowed to stand at 25°C for 2 days and then subjected to pre-charging, formation and grading.

**Table 3 Experimental results of electrical performance test of the lithium-ion battery without the mixture of a good electronic conductor and a good lithium-ion conductor added and the lithium-ion battery supplemented with lithium according to the present application**

| | Initial efficiency | Specific discharge capacity | Cell internal resistance | Normal temperature cycle |
|---|---|---|---|---|
| Comparative Example 3 | 84.5% | 180.7 mAh/g | 8.5 mΩ | 2150@80% |
| Example 3 | 84.9% | 181.1 mAh/g | 6.7 mΩ | 2300@80% |

### Example 4

(1) For a negative electrode active material (the mixture of graphite and silicon, with a capacity C_{negative} of 550 mAh g⁻¹ and an ICE of 85%), the pre-lithiation design capacity C_{design} was 100% of the irreversible capacity of the silicon-carbon negative electrode, the surface density ρ_{negative} surface density of the plate was 20 mg cm⁻², the area S_{negative} area of the plate was 82 cm², the specific capacity C_{Li} of metal lithium powder was 3600 mAh g⁻¹, and according to the lithium supplement amount of the negative electrode, the mass of the required metal lithium powder M_{Li} = ρ_{negative} surface density ^{∗} S_{negative} area ^{∗} C_{negative} ^{∗} (100% - ICE) ^{∗} 100%/CLi could be accurately calculated, that is, M_{Li} = 20 mg cm^{-2 ∗} 82 cm^{2 ∗} 550 mAh g^{-1 ∗} (100% - 85%) ^{∗} 100%/3600 mAh g⁻¹ = 37.6 mg.
(2) Metal lithium powder, a composite of a good electronic conductor and a good lithium-ion conductor and a binder were prepared into a lithium supplement slurry according to the ratio of 95% of metal lithium powder, 3% of the composite of a good electronic conductor and a good lithium-ion conductor (2% of the good electronic conductor and 1% of the good lithium-ion conductor) and 2% of the binder, 37.6 mg of metal lithium powder, 0.79 mg of carbon black, 0.40 mg of lithium carbonate, and 0.79 mg of polyvinylidene fluoride were uniformly mixed in tetrahydrofuran solvent, and the lithium supplement slurry was deposited in through holes and on surfaces of a copper foil porous current collector by means of spraying coating to prepare a copper foil porous current collector including lithium supplement coatings, where the thickness of the copper foil porous current collector was 10 µm, the aperture of the through holes was 0.2 µm, and the porosity was 20%.
(3) A negative electrode active material (the mixture of artificial graphite and simple substance silicon), a conductive agent (Super P) and a binder (PVDF) were mixed according to the weight ratio of 94:3:3 to prepare a slurry, the slurry was coated on the front and back sides of the copper foil porous current collector including lithium supplement coatings, and rolling and cutting were carried out after drying to obtain a negative electrode plate.
(4) A positive electrode active material (ternary material NCM), a conductive agent (Super P) and a binder (PVDF) were mixed according to the weight ratio of 93:3:4 to prepare a slurry, the slurry was coated on the front and back sides of an aluminum foil current collector, and rolling and cutting were carried out after drying to obtain a positive electrode plate. The positive electrode plate, the negative electrode plate and a ceramic separator were prepared into a lithium-ion battery by means of laminating, and the prepared battery was subjected to electrolyte injection, allowed to stand at 25°C for 2 days and then subjected to pre-charging, formation and grading. The experimental results are shown in Table 4, in which the following comparative example differs from this example in that the mixture of a good electronic conductor and a good lithium-ion conductor was not added in the negative electrode plate.

### Comparative Example 4

(1) Metal lithium powder and a binder were prepared into a lithium supplement slurry according to the ratio of 95% of metal lithium powder and 2% of the binder, 37.6 mg of metal lithium powder and 0.77 mg of polyvinylidene fluoride were uniformly mixed in tetrahydrofuran solvent, and the lithium supplement slurry was deposited in through holes and on surfaces of the copper foil porous current collector by means of spraying coating to prepare a copper foil porous current collector including lithium supplement coatings, where the thickness of the copper foil porous current collector was 10 µm, the aperture of the through holes was 0.2 µm, and the porosity was 20%.
(2) A negative electrode active material (the mixture of artificial graphite and simple substance silicon), a conductive agent (Super P) and a binder (PVDF) were mixed according to the weight ratio of 94:3:3 to prepare a slurry, the slurry was coated on the front and back sides of the copper foil porous current collector including lithium supplement coatings, and rolling and cutting were carried out after drying to obtain a negative electrode plate.
(3) A positive electrode active material (ternary material NCM), a conductive agent (Super P) and a binder (PVDF) were mixed according to the weight ratio of 93:3:4 to prepare a slurry, the slurry was coated on the front and back sides of an aluminum foil current collector, and rolling and cutting were carried out after drying to obtain a positive electrode plate. The positive electrode plate, the negative electrode plate and a ceramic separator were prepared into a lithium-ion battery by means of laminating, and the prepared battery was subjected to electrolyte injection, allowed to stand at 25°C for 2 days and then subjected to pre-charging, formation and grading.

**Table 4 Experimental results of electrical performance test of the lithium-ion battery without the mixture of a good electronic conductor and a good lithium-ion conductor added and the lithium-ion battery supplemented with lithium according to the present application**

| | Initial efficiency | Specific discharge capacity | Cell internal resistance | Normal temperature cycle |
|---|---|---|---|---|
| Comparative Example 4 | 84.7% | 181.5 mAh/g | 8.8 mΩ | 2060@80% |
| Example 4 | 85.2% | 182.3 mAh/g | 7.0 mΩ | 2140@80% |

In the present application, lithium supplement coatings are arranged on the surfaces of the copper foil porous current collector, where the lithium supplement coatings include metal lithium powder and a composite of a good electronic conductor and a good lithium-ion conductor, the lithium supplement slurry is deposited on the surfaces of the copper foil porous current collector by means of spraying coating or magnetron sputtering deposition, the negative electrode slurry is coated on the porous current collector including lithium supplement coatings after the coated lithium supplement slurry is dried, and then the negative electrode plate is assembled with a ceramic separator and a positive electrode plate into a battery. The negative electrode plate including lithium supplement coatings can achieve uniform and accurate lithium supplement on the silicon-carbon negative electrode plate and significantly improve the initial efficiency, specific discharge capacity and normal temperature cycle of the lithium-ion battery.

The above are only preferred examples of the present application and not intended to limit the present application. The scope of the present application is defined by the appended claims.

## Claims

1. A lithium supplement negative electrode plate, comprising a porous current collector, lithium supplement coatings on an upper surface and a lower surface of the porous current collector respectively, and active material layers on the surfaces of the lithium supplement coatings, wherein the lithium supplement coatings are filled into through holes of the porous current collector, and the lithium supplement coatings comprise the following components in mass percentage: 90% to 98% of metal lithium powder, 1% to 5% of a mixture of a good electronic conductor and a good lithium-ion conductor, and 1% to 5% of a binder.

2. The lithium supplement negative electrode plate according to claim 1, wherein the lithium supplement coating has a thickness of 2 µm to 10 µm.

3. The lithium supplement negative electrode plate according to claim 1, wherein the good electronic conductor is at least one of carbon black, Ketjen black, conductive graphite, conductive fibers, carbon nanotubes, and graphene, and the good lithium-ion conductor is at least one of LiF, Li₂CO₃, Li₄Ti₅O₁₂, Li₃PO₃, Li₄SiO₄, SiC, SiO₂, and CuS.

4. The lithium supplement negative electrode plate according to claim 1, wherein the binder is one of or a mixture of at least two of polytetrafluoroethylene, polyvinylidene fluoride, acrylic acid, polyethylene oxide, carboxymethyl cellulose sodium, styrene-butadiene rubber, hydroxypropyl methyl cellulose, carboxy styrene-butadiene latex, and polyvinyl alcohol.

5. The lithium supplement negative electrode plate according to claim 1, wherein the hole shape of the porous current collector is at least one of circle, oval, rhombus, polygon, and triangle; the matrix material of the porous current collector has a thickness of 5 µm to 30 µm, the aperture of the through holes is 0.2 mm to 3 mm, and the porosity is 10% to 40%; and the through holes are formed by one of hole punching, hole pressing, etching, electrolysis, electroplating, and laser etching.

6. A method for preparing the lithium supplement negative electrode plate according to any one of claims 1 to 5, comprising the following steps:
(1) selecting a suitable pre-lithiation capacity according to a capacity of a silicon-carbon negative electrode, accurately calculating the mass of required metal lithium powder according to the required pre-lithiation capacity, and depositing a lithium supplement slurry in through holes and on surfaces of a porous current collector using any one of magnetron sputtering deposition or spraying coating to obtain the porous current collector comprising lithium supplement coatings; and
(2) homogenizing a negative electrode active material, a conductive agent, a binder, and a solvent according to a certain proportion and sequence, coating the negative electrode slurry on the surfaces of the porous current collector comprising the lithium supplement coatings, drying same at 80°C to 120°C, rolling same after drying, and obtaining a rolled lithium supplement negative electrode plate.

7. The method for preparing the lithium supplement negative electrode plate according to claim 6, wherein the negative electrode active material, the conductive agent, and the binder are at a mass ratio of (88 to 98):(1 to 7):(1 to 5).

8. The method for preparing the lithium supplement negative electrode plate according to claim 6, wherein the negative electrode active material is at least one of simple substance silicon, silicon monoxide, silicon oxide, artificial graphite, natural graphite, composite graphite, soft carbon, and hard carbon; the conductive agent is at least one of conductive carbon black, conductive graphite, carbon nanotubes, carbon nanofibers, and graphene; and the binder is one of SBR, LA133, and PAA.

9. A lithium-ion battery, comprising a positive electrode plate, a separator, and a lithium supplement negative electrode plate according to any one of claims 1 to 5.
